(19) Europäisches Patentamt
European Patent Office
Office européen des brevets

(11) **EP 2 147 287 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(21) Anmeldenummer: **07725432.4**

(22) Anmeldetag: **22.05.2007**

(51) Int Cl.:
***G01H 3/00*** *(2006.01)*

(86) Internationale Anmeldenummer:
**PCT/EP2007/004532**

(87) Internationale Veröffentlichungsnummer:
**WO 2008/141663 (27.11.2008 Gazette 2008/48)**

(54) **VERFAHREN ZUR ERMITTLUNG VON ABLAGERUNGEN AN EINEM ULTRASCHALLWANDLER WÄHREND DESSEN BETRIEB**

METHOD FOR DETERMINATION OF DEPOSITS ON AN ULTRASONIC TRANSDUCER DURING OPERATION

PROCÉDÉ DE DÉTERMINATION DE DÉPÔTS SUR UN TRANSDUCTEUR ULTRASONORE EN COURS DE FONCTIONNEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**27.01.2010 Patentblatt 2010/04**

(73) Patentinhaber: **Siemens Aktiengesellschaft 80333 München (DE)**

(72) Erfinder:
• HAUPTMANN, Peter
  39326 Hermsdorf (DE)
• PÜTTMER, Alf
  76137 Karlsruhe (DE)
• SCHORB, Herbert
  76199 Karlsruhe (DE)
• SCHÄFER, Robert
  39114 Magdeburg (DE)

(56) Entgegenhaltungen:
EP-A- 1 480 021    US-A- 5 706 840

## Beschreibung

Die Erfindung betrifft ein Verfahren zur Ermittlung von Ablagerungen an einem Ultraschallwandler während dessen Betrieb, also eine Möglichkeit zur On-line Detektion eventueller Ablagerungen.

Aus der EP 1 480 021 A2 ist bereits ein Verfahren zur Ermittlung von Ablagerungen an einem Ultraschallwandler bekannt. Dabei wird wiederholt die Resonanzfrequenz des Ultraschallwandlers ermittelt und bei einer sich ändernden Resonanzfrequenz auf eine Ablagerung geschlossen.

Aus der US 5,706,840 A ist weiterhin bekannt, dass Ablagerungen die Dämpfungseigenschaften von Schallwandlern verändern.

Weitere Verfahren zur On-line Detektion eventueller Ablagerungen an Ultraschallwandlern sind nach dem Kenntnisstand der Anmelderin bisher nicht bekannt geworden.

Die Erfindung besteht darin, dass eine Möglichkeit angegeben wird, mit der eine On-line Detektion eventuelle Ablagerungen an einem Ultraschallwandler während dessen laufendem Betrieb möglich wird. Zudem wird ein Vorschlag zur numerischen Handhabung einer derartigen On-line Detektion präsentiert. Des Weiteren wird, nachdem das Verfahren oder die korrespondierende numerische Lösung bevorzugt in Software implementiert wird, ein nach dem Verfahren arbeitender Ultraschallwandler vorgeschlagen.

Erfindungsgemäß ist bei einem Verfahren der eingangs genannten Art vorgesehen, dass mittels einer Impedanzspektroskopie eine Konduktanz des Ultraschallwandlers ermittelt wird, anhand der Konduktanz eine Dämpfung und eine Resonanz des Ultraschallwandlers ermittelt wird und die Resonanz in einem Koordinatensystem über der Dämpfung aufgetragen wird und anhand sich dabei ergebender Ortspunkte, insbesondere anhand der Lage solcher Ortspunkte innerhalb des Koordinatensystems, z.B. anhand der Lage solcher Ortspunkte auf sich in einem $\Delta f$-$\Delta R$-Diagramm als Koordinatensystem ergebenden Kennlinien, auf eventuelle Ablagerungen geschlossen wird. Ein Ortspunkt ist also ein Punkt in einem Koordinatensystem oder ein Punkt auf einer Kennlinie in einem solchen Koordinatensystem.

Der Vorteil der Erfindung besteht zunächst darin, dass mit dem eingangs skizzierten und nachfolgend weiter erläuterten Ansatz erstmals eine On-line Detektion eventuell an einer exponierten Oberfläche eines Ultraschallwandlers aufwachsende Ablagerungen während dessen Betrieb, also bei ununterbrochener Sensoraktivität des Ultraschallwandlers, möglich sind. Mit dem Erkennen eventueller Ablagerungen, bevorzugt mit dem Erkennen von Ablagerungen ab einer vorgegebenen oder vorgebbaren kritischen Stärke, ist einerseits eine Aussage über die Zuverlässigkeit/Gültigkeit einer vom Ultraschallsignal abgeleiteten Messgröße und andererseits eine Indikation einer durchzuführenden Reinigung der Wandleroberfläche möglich. Des Weiteren lässt sich mit derartigen Daten auch eine bedarfsabhängige Instandhaltung organisieren.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Zur numerischen Ermittlung von Dämpfung und Resonanz des Ultraschallwandlers anhand der Konduktanz ist vorgesehen, dass als Konduktanz eine gemessene Konduktanz und eine geschätzte Konduktanz angesetzt werden und auf Basis einer Differenz von gemessener und geschätzter Konduktanz eine Fehlerfunktion definiert wird.

Bevorzugt ist vorgesehen, dass zur Ermittlung der geschätzten Konduktanz ein Ersatzschaltbild des Ultraschallwandlers angenommen wird, welches für jede Resonanzfrequenz des Ultraschallwandlers einen Serienzweig umfasst. Auf diese Art und Weise wird vermieden, dass bei einer gleichzeitigen Schätzung aller Parameter über das gesamte, Grundfrequenz und Obertöne umfassende, betrachtete Spektrum nur eine suboptimale Schätzung erhältlich ist, wenn Mehrdeutigkeiten in der Lösung aufgrund lokaler Minima nicht ausgeschlossen werden können.

Wenn zur Minimierung einer durch die Fehlerfunktion beschriebenen Abweichung von gemessener und geschätzter Konduktanz ein numerisches Optimierungsverfahren, insbesondere das so genannte Gauß-Newton-Verfahren, verwendet wird, ist eine kontinuierliche Ausführung des Verfahrens möglich, wobei bei Verwendung des Gauß-Newton-Verfahrens eine schnelle Konvergenz des Optimierungsverfahrens gewährleistet ist.

Auf der Basis eines Ersatzschaltbildes des Ultraschallwandlers, das für jede betrachtete Resonanzfrequenz des Ultraschallwandlers einen Serienzweig umfasst, lassen sich bei Anwendung des numerischen Optimierungsverfahrens Schätzwerte für die Dämpfung und die Resonanz des Ultraschallwandlers ermitteln, wobei die Schätzwerte für eine Mehrzahl von Resonanzfrequenzen des Ultraschallwandlers jeweils separat bestimmt werden. Dies ist, wie weiter oben bereits erwähnt, vorgesehen, um suboptimale Lösungen im Bereich lokaler Minima zu vermeiden.

Bevorzugt ist vorgesehen, dass bei der Mehrzahl der Resonanzfrequenzen deren Auswahl nach ihrer jeweiligen Dominanz innerhalb der in einem Konduktanzspektrum nach jeweiliger Ausscheidung einer vorherigen dominanten Resonanz verbleibenden Resonanzen erfolgt. Es wird also stets die Konduktanz im Bereich der dominanten Resonanz betrachtet, so dass nur ausreichend charakteristische Daten in das numerische Optimierungsverfahren einfließen.

Weiter bevorzugt ist zum Rückschluss auf eventuelle Ablagerungen anhand zumindest eines Ortspunktes die Einführung eines Klassifikators vorgesehen, der eine Lage von Ortspunkten bei einer unbeschichteten oder zumindest im Wesentlichen unbeschichteten, d.h. ablagerungsfreien Oberfläche des Ultraschallwandlers, von einer Lage entsprechender Ortspunkte bei einer beschichteten Wandleroberfläche unterscheidbar macht.

Nachdem das bisher beschriebene und nachfolgend weiter erläuterte Verfahren bevorzugt in Software implementiert wird, betrifft die Erfindung auch ein Computerprogramm mit durch einen Computer ausführbaren Programmcodeanweisungen zur Implementierung des Verfahrens und seiner bisher skizzierten oder nachfolgend weiter erläuterten Ausgestaltungen. Des Weiteren betrifft die Erfindung auch ein Computerprogrammprodukt, z.B. ein Speichermedium, mit einem durch einen Computer ausführbaren derartigen Computerprogramm, also z.B. ein Speichermedium, das im Zusammenhang mit einem Ultraschallwandler verwendbar ist und für eine dem Ultraschallwandler zugeordnete Verarbeitungseinheit, z.B. einen Prozessor oder dergleichen, eine Ausführung des auf dem Speichermedium vorgehaltenen Computerprogramms möglich macht. Schließlich betrifft die Erfindung auch einen Ultraschallwandler mit einem solchen Computerprogrammprodukt oder einer Implementation eines solchen Computerprogramms mit Mitteln zur Signalisierung einer nach dem bisher beschriebenen und nachfolgend weiter erläuterten Verfahren eventuell erkannten Ablagerung, wobei als Signalisierungsmittel optische oder akustische Signalisierungsmittel, die sich an die Wahrnehmung menschlicher Benutzer richten, oder elektronische Signalisierungsmittel dienen, die z.B. eine eine Ablagerung anzeigende Information auf ein Kommunikationsmedium, z.B. einen Feldbus oder dergleichen, absenden, so dass eine Interpretation durch eine übergeordnete Einheit, etwa eine Leitwarte oder dergleichen, möglich ist.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen, in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Nachfolgend wird ein Ausführungsbeispiel der Erfindung anhand der Zeichnungen näher erläutert. Einander entsprechende Gegenstände oder Elemente sind in allen Figuren mit den gleichen Bezugszeichen versehen.

Darin zeigen

FIG 1     eine schematisch vereinfachte Darstellung eines Ultraschallwandlers,
FIG 2a    und
FIG 2b    die Impedanz eines typischen Ultraschallwandlers nach Betrag bzw. Phase,
FIG 3a    und
FIG 3b    Ersatzschaltbilder für die elektrische Impedanz eines Ultraschallwandlers in Resonanznähe,
FIG 4a    ein Konduktanzspektrums des Ultraschallwandlers,
FIG 4b    ein anhand eines Ersatzschaltbild modelliertes Konduktanzspektrum um eine dominante Resonanz,
FIG 4c    ein daraus resultierendes Differenzspektrum und
FIG 4d    alle so modellierten Serienresonanzen des Ausgangsspektrums anhand der Konduktanz,
FIG 5     einen mechanischen Übertragungsvierpol zur Modellierung einer auf die Wandleroberfläche wirkenden akustischen Last in Abhängigkeit von einer Dicke einer auf der Wandleroberfläche aufwachsenden Ablagerung sowie der akustischen Impedanz einer angrenzenden Flüssigkeit und
FIG 6     Änderungen der Dämpfung und der Resonanzlage eines Ultraschallwandlers in Abhängigkeit von einer Dicke einer auf der Wandleroberfläche aufwachsenden Ablagerung sowie der akustischen Impedanz einer angrenzenden Flüssigkeit.

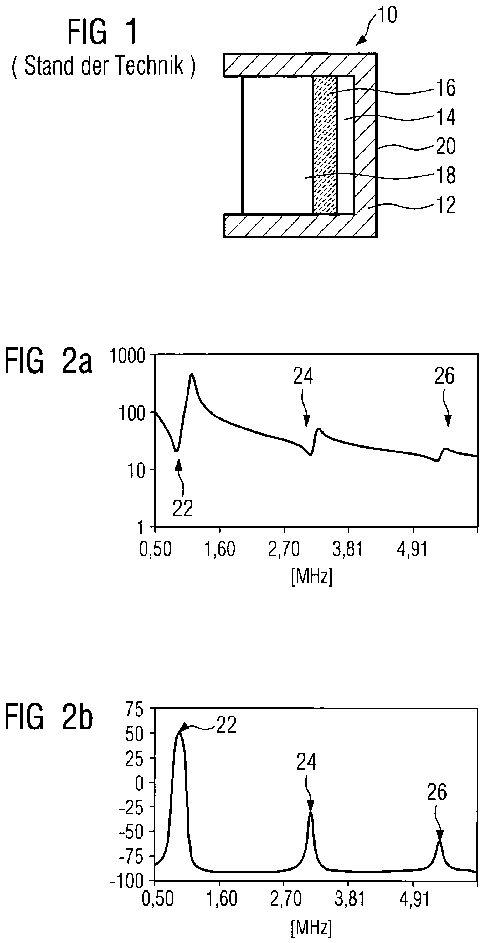

FIG 1 zeigt eine schematisch vereinfachte Darstellung eines Ultraschallwandlers 10 mit einem Gehäuse 12, einer mechanischen Ankopplung 14 einer Elektroden umfassenden Keramik 16 und einem optionalen so genannten Backing 18. Der dargestellte Ultraschallwandler 10 und dessen Verwendung sind grundsätzlich an sich bekannt, so dass auf beides nicht weiter eingegangen wird.

Beim Einsatz derartiger Ultraschallwandler 10 in flüssigen Medien, z.B. beim Messen in Suspensionen, in mit biologischen Komponenten versetzten Flüssigkeiten oder in Polymerschmelzen, kann es zum Aufwachsen von im Folgenden als Ablagerungen bezeichneten Sedimentschichten an exponierten Oberflächen 20 kommen. Solche Ablagerungen wirken sich störend auf das Messsignal aus, so dass insbesondere bei der Auswertung von amplituden- oder laufzeitabhängigen Größen nicht tolerierbare Messfehler auftreten können. Aus diesem Grund ist eine Detektion derartiger Ablagerungen im laufenden Betrieb des Ultraschallwandlers 10 wünschenswert, um eine Aussage über die Zuverlässigkeit der Messgröße bzw. über anfallenden Wartungsbedarf treffen zu können.

Die Erfindung sieht dazu vor, aus einer frequenzabhängigen elektrischen Konduktanz eines Ultraschallwandlers 10 eine Aussage über eine Lage und eine Dämpfung der senkrecht zur Wandleroberfläche agierenden Longitudinalmode bei der Fundamentalfrequenz sowie bei den Obertönen zu gewinnen. Im Vergleich zwischen beschichteter, also durch Ablagerungen verunreinigter, und unbeschichteter Wandleroberfläche bei variierender durch eine jeweils angrenzende Flüssigkeit (nicht dargestellt) gegebener akustischer Last zeigen sich dabei unterscheidbare Charakteristika im zweidimensionalen, durch Frequenz und Dämpfung aufgespannten Raum. Im Rahmen einer Klassifikation können somit die gemessenen Frequenz- und Dämpfungswerte lastunabhängig dem beschichteten bzw. dem unbeschichteten Zustand der Wandleroberfläche zugeordnet werden.

Die frequenzabhängige elektrische Konduktanz eines resonanten, auch als Sensor oder kurz als Wandler bezeichneten Ultraschallwandlers 10

$$G(\omega) = \mathrm{Re}\left\{Z^{-1}(\omega)\right\} \qquad [1]$$

wird nach dem Ansatz gemäß der Erfindung im Rahmen einer Impedanzspektroskopie bestimmt. Die Spektroskopie kann z.B. durch die Auswertung der Amplitude und der Phase des Sensorsignals bei kontinuierlicher monochromatischer Anregung im Frequenz-Sweep oder durch die Auswertung der Systemantwort bei Impulsanregung erfolgen.

FIG 2a und FIG 2b stellen die Impedanz $Z(\omega)$ eines typischen Ultraschallwandlers 10 (FIG 1) nach Betrag bzw. Phase dar. An den ausgeprägten Extremwerten erkennt man von links nach rechts die Grundschwingung 22, den ersten Oberton 24 und den zweiten Oberton 26.

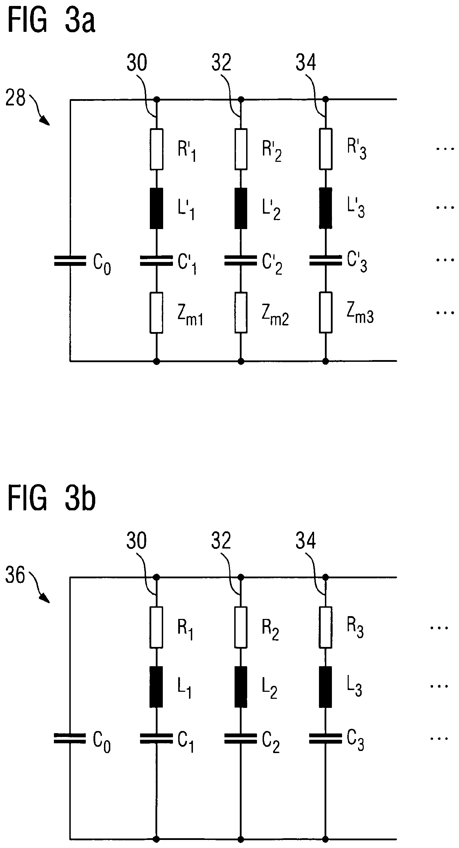

Die Erfinder haben erkannt, dass sich in Resonanznähe die elektrische Impedanz $Z(\omega)$ des Wandlers 10 durch ein modifiziertes Butterworth-van-Dyke Ersatzschaltbild 28 entsprechend FIG 3a darstellen lässt. Gezeigt ist das Butterworth-van-Dyke Ersatzschaltbild 28 des Ultraschallwandlers 10 zur Darstellung seiner elektrischen Impedanz bei Fundamentalfrequenz und Obertönen. Hierbei bildet jeder Serienzweig 30, 32, 34, bestehend aus den dynamischen Ersatzgrößen Widerstand $R'_i \,|i = 1...I$, Induktivität $L'_i$, und Kapazität $C'_i$, sowie der wirkenden akustischen Last an der Wandleroberfläche $Z_i$ eine Resonanz ab. Die Widerstände $R'_i$ repräsentieren Energieverluste des oszillierenden Systems. Die Induktivitäten $L'_i$ und die Kapazitäten $C'_i$ repräsentieren die Fähigkeit des Systems, kinetische bzw. potentielle Energie zu speichern. Die Kapazität $C_0$ entspricht der statischen Kapazität zwischen den Elektroden mit der Keramik 16 (FIG 1) als Dielektrikum.

Unter Berücksichtigung einer sich ändernden akustischen Last $\Delta Z_i$ lassen sich die im Folgenden als Ersatzparameter bezeichneten charakteristischen Größen des Butterworth-van-Dyke Ersatzschaltbilds 28 wie folgt zusammenfassen:

$$R_i = R'_i + \mathrm{Re}\left\{Z_i + \Delta Z_i\right\} \qquad [2]$$

$$\omega L_i - \left(\omega C_i\right)^{-1} = \omega L'_i - \left(\omega C'_i\right)^{-1} + \mathrm{Im}\left\{Z_i + \Delta Z_i\right\} \qquad [3]$$

Das bedeutet, dass eine Änderung der akustischen Last $\Delta Z_i$ als eine Änderung des dynamischen Widerstands sowie als eine Änderung der dynamischen Reaktanz aufgefasst werden kann.

Entsprechend einem in FIG 3b dargestellten verallgemeinerten Ersatzschaltbild 36 gilt für die im Folgenden mit dem Formelzeichen $G$ bezeichnete Konduktanz bei Kreisfrequenz $\omega_n \,|n = 1...N$

$$G_n = G(\omega_n) = \sum_i \frac{\omega_n^2 R_i C_i^2}{\left(\omega_n R_i C_i\right)^2 + \left(\dfrac{\omega_n}{\Omega_i}\right)^4 - 2\left(\dfrac{\omega_n}{\Omega_i}\right)^2 + 1} \qquad [4]$$

wobei

$$\Omega_i = \sqrt{\frac{1}{L_i C_i}} \qquad [5]$$

der durch den i-ten Serienzweig 30, 32, 34 repräsentierten Resonanzfrequenz entspricht. Gleichung 4 ist zu entnehmen, dass bei Serienresonanz jeweils ein lokales Konduktanzmaximum

$$G(\Omega_i) = R_i^{-1} \qquad\qquad [6]$$

vorliegt. Eine Änderung der akustischen Last $\Delta Z_i$ ist somit durch eine Dämpfungsänderung $\Delta R_i$ sowie eine Resonanzänderung $\Delta\Omega_i$ charakterisiert. Für die Bestimmung der beiden charakteristischen Größen ist eine Schätzung der Ersatzparameter $R_i$, $L_i$ und $C_i$ vorgesehen. Für diesen Zweck eignet sich beispielsweise das Gauss-Newton-Verfahren, wobei eine Fehlerfunktion

$$r_k = \hat{G}_k(\boldsymbol{\theta}) - G_k \qquad \big| k = K_0 ... K_1 \qquad\qquad [7]$$

eingeführt wird. Die Fehlerfunktion gibt die Differenz zwischen einer geschätzten Konduktanz $\hat{G}$ in Abhängigkeit von einem Parametersatz $\theta$ und der anhand der Impedanzspektroskopie entsprechend Gleichung 1 gemessenen Konduktanz bei jeder Kreisfrequenz $\omega_k$ an. Gesucht wird nun ein Parametersatz, der eine Zielfunktion

$$\varepsilon = \sum_k r_k^2 \xrightarrow{\theta} \min! \qquad\qquad [8]$$

minimiert.

In diesem Zusammenhang haben die Erfinder erkannt, dass eine gleichzeitige Schätzung aller Parameter über das gesamte betrachtete Spektrum (Grundfrequenz und Obertöne) mit hoher Wahrscheinlichkeit zu einer suboptimalen Schätzung führt, da eine Mehrdeutigkeit in der Lösung aufgrund lokaler Minima nicht ausgeschlossen werden kann. Daher ist bevorzugt vorgesehen, dass die Ersatzparameter jeder Resonanz separat bestimmt werden.

Hierfür ist zunächst unter den Resonanzen 22, 24, 26 (vgl. FIG 2a, 2b) die dominante Resonanz durch das Auffinden des globalen Maximums der Konduktanz $G_{max} = \max(G_n) \,|\forall n$ im betrachteten Spektrum zu bestimmen. Bei einem Ultraschallwandler 10 entspricht das Frequenzargument der Konduktanz an dieser Stelle der Fundamentalfrequenz der Longitudinalmode $\Omega_0$, wobei $G_k = G(\omega_k)$ die Konduktanzwerte im Frequenzintervall $[\omega_{K_0}; \omega_{K_1}]$ um $\Omega_0$ sind. $K_0$ und $K_1$ sind dabei so gewählt, dass zum einen für die Fehlerminimierung nach Gleichung 8 genügend viele Werte $G_k$ vorliegen und zum anderen sichergestellt ist, dass der Einfluss benachbarter Resonanzen (auch der von parasitären Wellenmoden) weitestgehend begrenzt wird. Das bedeutet

$$\frac{dG}{d\omega} = \begin{cases} \geq 0 & ; \omega \in \left[\omega_{K_0}; \Omega_0\right] \\ \leq 0 & ; \omega \in \left[\Omega_0; \omega_{K_1}\right] \end{cases} . \qquad\qquad [9]$$

Das Gauß-Newton-Verfahren benötigt initiale Schätzwerte für die Elemente von

$$\boldsymbol{\theta}_0 = \begin{bmatrix} \hat{R} & \hat{C} & \hat{\Omega} \end{bmatrix} \qquad\qquad [10]$$

Aus dem verallgemeinerten Ersatzschaltbild 36 gemäß FIG 3b erhält man

$$\hat{R} = G_\kappa^{-1} = \max(G_k)^{-1} \qquad \big| \forall k \qquad\qquad [11]$$

sowie

$$\hat{\Omega} = \omega_\kappa \qquad\qquad [12]$$

Der Anfangswert für die dynamische Kapazität ist in einem bestimmten Bereich frei wählbar. Das Gauß-Newton-Verfahren konvergiert über einen sehr großen Bereich der Werte für $\hat{C}$ zu einer Lösung (Größenordnung Femto-Farad [fF] bis Nano-Farad [nF]), da die beiden anderen Ersatzparameter $\hat{R}$ und $\hat{\Omega}$ aufgrund der bekannten Gesetzmäßigkeiten am Serienresonanzzweig 30, 32, 34 sehr genau in Ihren Anfangswerten geschätzt werden können.

Neben der Fehlerfunktion entsprechend Gleichung 7 ist beim Gauß-Newton-Verfahren weiterhin die Matrix der Ableitungen der Fehlerfunktion nach dem Parametersatz zu berechnen, wobei jede Spalte die Ableitung nach einem der Parameter, und jede Zeile die entsprechende Ableitung bei einer bestimmten Frequenz im betrachteten Intervall enthält:

$$\mathbf{D}_{k,1} \quad = \frac{\partial r}{\partial R} \quad = -\omega_k^2 C^2 \Omega^4 \frac{\left(\omega RC\right)^2 \Omega^4 - \left[\omega_k^2 - \Omega^2\right]^2}{\left\{\left(\omega RC\right)^2 \Omega^4 + \left[\omega_k^2 - \Omega^2\right]^2\right\}^2}$$

$$\mathbf{D}_{k,2} \quad = \frac{\partial r}{\partial C} \quad = \frac{2RC\omega_k^2 \Omega^4 \left[\omega_k^2 - \Omega^2\right]^2}{\left\{\left(\omega RC\right)^2 \Omega^4 + \left[\omega_k^2 - \Omega^2\right]^2\right\}^2} \qquad [13]$$

$$\mathbf{D}_{k,3} \quad = \frac{\partial r}{\partial \Omega} \quad = \frac{4RC^2 \omega_k^4 \Omega^3 \left(\omega_k^2 - \Omega^2\right)}{\left\{\left(\omega RC\right)^2 \Omega^4 + \left[\omega_k^2 - \Omega^2\right]^2\right\}^2}$$

Die Anfangswerte der Elemente von $\theta_0$ werden nun um

$$\mathbf{s}_0 = \mu \left(\mathbf{D}^T \mathbf{D}\right)^{-1} \mathbf{D}^T \mathbf{r} \qquad [14]$$

im Sinne der Fehlerminimierung verbessert, wobei über den skalaren Wert $\mu$ die Schrittweite der Verbesserung gesteuert werden kann. Mit den so gewonnenen neuen Werten $\theta_1$ werden anschließend wiederum $\mathbf{D}_1$ und $\mathbf{r}_1$ berechnet. Mit

$$\theta_{j+1} = \theta_j - \mu \left(\mathbf{D}_j^T \mathbf{D}_j\right)^{-1} \mathbf{D}_j^T \mathbf{r}_j \qquad [15]$$

konvergiert der Parametersatz iterativ zu einer fehlerminimalen Lösung für Gleichung 8.

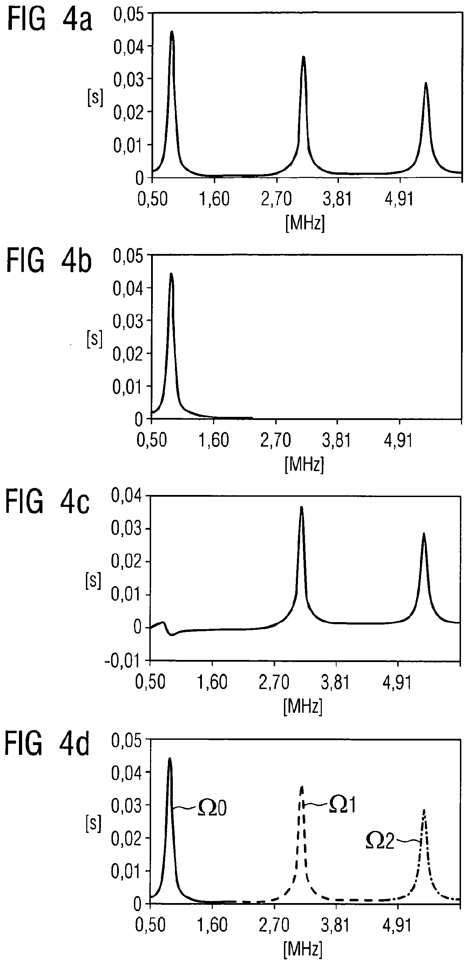

FIG 4a stellt die gemessene Konduktanz $G_n$ (eigentlich das gemessene Konduktanzspektrum) dar. FIG 4b zeigt die um die dominante Resonanz approximierte Konduktanz $\hat{G}_n$.

Für die Berechnung der weiteren Ersatzparameter der die Obertöne repräsentierenden Serienresonanzzweige 30, 32, 34 wird nun die approximierte Konduktanz $\hat{G}_n$ von den gemessenen Werten $G_n$ subtrahiert. Das entstehende Differenzspektrum

$$G'_n = G_n - \hat{G}_n \qquad [16]$$

ist in FIG 4c dargestellt. Analog zur oben beschriebenen Vorgehensweise dient $G'_n$ nun dem Auffinden der nächsten dominanten Resonanz. Die Schätzung der Ersatzparameter des jeweiligen Serienzweigs 30, 32, 34 unter Verwendung des Gauß-Newton-Verfahrens mit anschließender Subtraktion der so modellierten Konduktanz vom Ausgangsspektrum wird wiederholt, bis schließlich alle Ersatzparameter $R_i$, $L_i$, $C_i$ des verallgemeinerten Ersatzschaltbildes 36 vorliegen. FIG 4d zeigt alle so modellierten Serienresonanzen des Ausgangsspektrums anhand der Konduktanz.

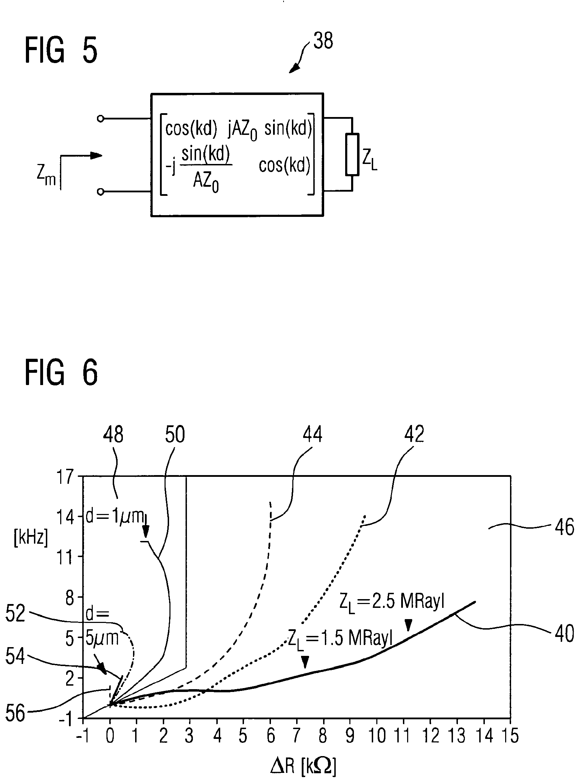

Für die Detektion von Sedimentschichten auf der Wandleroberfläche sind Dämpfung bzw. Lage jeder betrachteten Resonanz von Interesse. Unter Verwendung der oben beschriebenen Methode zur Schätzung der Ersatzparameter sind beide Größen in Form von $R_i$ bzw. $\Omega_i$ messbar. Entsprechend FIG 5 kann die auf die Wandleroberfläche wirkende akustische Last $Z_m$ in Abhängigkeit von einer Dicke $d$ einer auf der Wandleroberfläche aufwachsenden Ablagerung sowie der akustischen Impedanz einer angrenzenden Flüssigkeit $Z_L$ als ein mechanischer Übertragungsvierpol 38 dargestellt werden.

Dabei bezeichnen

$d$      eine Dicke der Ablagerung

$A$      eine (exponierte) Wandlerfläche

$c_0$      Schallgeschwindigkeit in der Ablagerung

$Z_0$      die akustische Impedanz der Ablagerung

$$k = \frac{\omega}{c_0}$$ die Wellenzahl

$Z_L$ die akustische Impedanz der Flüssigkeit und

$Z_m$ die akustische Impedanz an der Wandleroberfläche.

Es wird ersichtlich, dass bei fehlender Sedimentschicht $Z_m(d = 0) = Z_L$ ist. Demgegenüber wirkt die akustische Impedanz der Flüssigkeit im Fall von Ablagerungen mit

$$Z_m = A \frac{Z_L - jZ_0 \tan(kd)}{1 - j\dfrac{Z_L}{Z_0} \tan(kd)} \qquad\qquad [17]$$

auf die Wandleroberfläche.

Relativ zur Situation [$d = 0$; $Z_L = 0$] sind in FIG 6 die Änderungen der Dämpfung und der Resonanzlage in einem "$\Delta R_i$ - $\Delta \Omega_i$ -Diagramm", also in einem Koordinatensystem, in dem die Resonanz $\Omega$ über der Dämpfung $R$ aufgetragen wird, dargestellt. Dabei ergeben sich für zunehmende $Z_L$ Kennlinien 40, 42, 44, wobei sich für jeweils ein bestimmtes $Z_L$, also eine bestimmte Flüssigkeit und eine damit einhergehende akustische Impedanz derselben, auf den Kennlinien 40, 42, 44 in FIG 6 nicht näher dargestellte Ortspunkte für die jeweilige Resonanz $\Omega$ bzw. Dämpfung $R$ ergeben. Die mit 40, 42, 44 bezeichneten Kennlinien liegen in einem abgegrenzten ersten Bereich 46 des Koordinatensystems. Die Kennlinien 40, 42, 44 und evtl. weitere Kennlinien 50, 52, 54, 56 sind eine Darstellung der Sensorantwort, also der aus einer spezifischen akustischen Last des Sensors (=Ultraschallwandlers 10) resultierenden Werte des dämpfungsabhängigen Parameters $\boldsymbol{R}$ und der Serienresonanz $\boldsymbol{f}$ bzw. $\Omega$, mit $\Omega=2\pi/\boldsymbol{f}$, im $\Delta\boldsymbol{f}$-$\Delta\boldsymbol{R}$-Diagramm, wie das dargestellte Koordinatensystem auch bezeichnet werden könnte. In einem komplementären, zweiten Bereich 48 des Koordinatensystems sind weitere Kennlinien 50, 52, 54, 56 eingezeichnet, die sich für einen Wandler mit einer Ablagerung mit einer Dicke von z.B. 1$\mu$m oder 5$\mu$m ergeben. Mit anderen Worten gehören also Kennlinien 40, 42, 44 im ersten Bereich 46 oder Ortspunkte auf solchen Kennlinien 40, 42, 44 zu einer Situation, bei der keine oder im Wesentlichen keine Sedimente am Wandler abgelagert sind und entsprechend Kennlinien 50, 52, 54, 56 im zweiten Bereich 48 oder Ortpunkte auf solchen Kennlinien 50, 52, 54, 56 zu einer Situation, bei der Ablagerungen am Wandler bestehen. Entsprechend der Zugehörigkeit der jeweiligen, anhand von Resonanz $\Omega$ und Dämpfung $R$ spezifizierten Ortspunkte zum ersten oder zweiten Bereich 46, 48 kann damit auf eventuelle Ablagerungen geschlossen werden. Für eine mathematisch einfache Erkennung einer Zugehörigkeit zum ersten oder zweiten Bereich 46, 48 ist ein Klassifikator vorgesehen, der z.B. die Kontur des ersten oder zweiten Bereichs 46, 48 oder die Grenzlinie zwischen erstem und zweitem Bereich beschreibt so dass sich anhand dessen eine Zugehörigkeit von Ortspunkten entweder zum ersten oder zweiten Bereich 46, 48 eindeutig bestimmen lässt.

Anhand der Darstellung in FIG 6, die eine Aufnahme von Werten für eine konkrete Messsituation darstellt, wird deutlich, dass bereits bei kleineren Stärken (Dicken) solcher Ablagerungen signifikante Unterschiede in den Kennlinien auftreten. Im interessierenden, durch flüssige Medien vorgegebenen Lastbereich $Z_L > 1MRayl$ ist eine klare Trennung der Kennlinien für $d = 0$ bzw. $d > 0$ möglich. Das bedeutet, dass durch einen entsprechenden Klassifikator deutlich zwischen einer "sauberen" und einer durch Ablagerungen verunreinigten Wandleroberfläche unterschieden werden kann.

Mit dem Ansatz gemäß der Erfindung wird eine Aussage über die Zuverlässigkeit/Gültigkeit einer vom Ultraschallsignal abgeleiteten Messgröße, eine Indikation einer durchzuführenden Reinigung der Wandleroberfläche oder einer Instandhaltung des Geräts, in dem die Wandler verbaut sind, möglich. Zudem eröffnet die jetzt bestehende Möglichkeit eventuelle Ablagerungen im Betrieb des Ultraschallwandlers 10 zu erkennen, auch eine bedarfsabhängige Instandhaltung.

**Patentansprüche**

1. Verfahren zur Ermittlung von Ablagerungen an einem Ultraschallwandler (10) während dessen Betrieb, **dadurch gekennzeichnet, dass** mittels einer Impedanzspektroskopie eine Konduktanz des Ultraschallwandlers (10) ermittelt wird,
   wobei anhand der Konduktanz eine Dämpfung (R) und eine Resonanz ($\Omega$) des Ultraschallwandlers (10) ermittelt wird und
   wobei die Resonanz ($\Omega$) in einem Koordinatensystem über der Dämpfung (R) aufgetragen wird und anhand sich dabei ergebender Ortspunkte auf eventuelle Ablagerungen geschlossen wird.

**2.** Verfahren nach Anspruch 1, wobei als Konduktanz eine gemessene Konduktanz ($G$) und eine geschätzte Konduktanz ($\hat{G}$) angesetzt werden und wobei auf Basis einer Differenz von gemessener Konduktanz ($G$) und geschätzter Konduktanz ($\hat{G}$) eine Fehlerfunktion ($\varepsilon$) definiert wird.

**3.** Verfahren nach Anspruch 2, wobei für die geschätzte Konduktanz ($\hat{G}$) ein Ersatzschaltbild (28, 36) des Ultraschallwandlers (10) angenommen wird, das für jede Resonanzfrequenz des Ultraschallwandlers (10) einen Serienzweig (30, 32, 34) umfasst.

**4.** Verfahren nach Anspruch 2 oder 3, wobei zur Minimierung einer durch die Fehlerfunktion ($\varepsilon$) beschriebenen Abweichung von gemessener Konduktanz ($G$) und geschätzter Konduktanz ($\hat{G}$) ein numerisches Optimierungsverfahren, insbesondere das sogenannte Gauß-Newton-Verfahren, verwendet wird.

**5.** Verfahren nach Anspruch 3 und 4, wobei bei Anwendung des numerischen Optimierungsverfahrens Schätzwerte für die Dämpfung ($R$) und die Resonanz ($\Omega$) des Ultraschallwandlers (10) ermittelt werden und wobei die Schätzwerte für eine Mehrzahl von Resonanzfrequenzen des Ultraschallwandlers (10) separat bestimmt werden.

**6.** Verfahren nach Anspruch 5, wobei bei der Mehrzahl der Resonanzfrequenzen deren Auswahl nach ihrer jeweiligen Dominanz innerhalb der in einem Konduktanzspektrum nach jeweiliger Ausscheidung einer vorherigen dominanten Resonanz verbleibenden Resonanzen erfolgt.

**7.** Verfahren nach einem der vorangehenden Ansprüche, wobei mit Ermittlung der Dämpfung ($R$) und der Resonanz ($\Omega$), insbesondere der Resonanz ($\Omega$) und der Lage der Resonanz ($\Omega$), eine auf eine Oberfläche des Ultraschallwandlers (10) wirkende akustische Last ($Z$) in Abhängigkeit von einer Dicke ($d$) der zu bestimmenden Ablagerung ermittelt wird.

**8.** Verfahren nach einem der vorangehenden Ansprüche, wobei zum Rückschluss auf eventuelle Ablagerungen anhand zumindest eines Ortspunktes ein Klassifikator eingeführt wird, der eine Lage von Ortspunkten bei einer unbeschichteten oder zumindest im Wesentlichen unbeschichteten Oberfläche des Ultraschallwandlers (10) von einer Lage von entsprechenden Ortspunkten bei einer beschichteten Wandleroberfläche unterscheidbar macht.

**9.** Computerprogramm mit durch einen Computer ausführbaren Programmcodeanweisungen zur Implementierung des Verfahrens nach einem der Ansprüche 1 bis 8 wenn das Computerprogramm auf einem Computer ausgeführt wird.

**10.** Computerprogrammprodukt, insbesondere Speichermedium, mit einem durch einen Computer ausführbaren Computerprogramm gemäß Anspruch 9.

**11.** Ultraschallwandler (10) mit einem Computerprogrammprodukt gemäß Anspruch 10 oder einer Implementation des Computerprogramms gemäß Anspruch 9 mit Mitteln zur Signalisierung einer
durch Ermitteln einer Konduktanz des Ultraschallwandlers (10) mittels einer Impedanzspektroskopie,
durch Ermitteln einer Dämpfung ($R$) und einer Resonanz ($\Omega$) des Ultraschallwandlers (10) und
durch Auftragen der Resonanz ($\Omega$) in einem Koordinatensystem über der Dämpfung ($R$) und anhand sich dabei ergebender Ortspunkte erkannten Ablagerung.

**Claims**

**1.** Method for determination of deposits on an ultrasound transducer (10) during the operation thereof,
**characterised in that**
a conductance of the ultrasound transducer (10) is determined by means of an impedance spectroscopy,
wherein, on the basis of the conductance, an attenuation ($R$) and a resonance ($\Omega$) of the ultrasound transducer (10) is determined and
wherein the resonance ($\Omega$) is plotted against the attenuation ($R$) in a coordinate system and, on the basis of reference points resulting thereby, possible deposits are inferred.

**2.** Method according to claim 1, wherein a measured conductance ($G$) and an estimated conductance ($\hat{G}$) are set as conductance and wherein, based on a difference between measured conductance ($G$) and estimated conductance ($\hat{G}$), an error function ($\varepsilon$) is defined.

3. Method according to claim 2, wherein for the estimated conductance ($\hat{G}$) an equivalent circuit diagram (28, 36) of the ultrasound transducer (10) is assumed, which comprises a series branch (30, 32, 34) for each resonant frequency of the ultrasound transducer (10).

4. Method according to claim 2 or 3, wherein in order to minimise a deviation between measured conductance ($G$) and estimated conductance ($\hat{G}$) described by the error function ($\varepsilon$) a numerical optimisation method, in particular what is known as the Gauss-Newton method, is used.

5. Method according to claim 3 and 4, wherein, when the numerical optimisation method is applied, estimated values for the attenuation ($R$) and the resonance ($\Omega$) of the ultrasound transducer (10) are determined and wherein the estimated values are defined separately for a plurality of resonant frequencies of the ultrasound transducer (10).

6. Method according to claim 5, wherein, for the plurality of resonant frequencies, the selection thereof is effected according to their respective dominance within the resonance remaining in a conductance spectrum after the respective elimination of a previous dominant resonance.

7. Method according to one of the preceding claims, wherein, with the determination of the attenuation ($R$) and the resonance ($\Omega$), in particular the resonance ($\Omega$) and the position of the resonance ($\Omega$), an acoustic load ($Z$) acting on a surface of the ultrasound transducer (10) is determined as a function of a thickness ($d$) of the deposit to be defined.

8. Method according to one of the preceding claims, wherein, in order to infer possible deposits, a classifier is established on the basis of at least one reference point, which classifier makes it possible to differentiate a position of reference points for an uncoated or at least substantially uncoated surface of the ultrasound transducer (10) from a position of corresponding reference points for a coated transducer surface.

9. Computer program with program code instructions for implementing the method according to one of claims 1 to 8 when the computer program is executed on a computer.

10. Computer program product, in particular storage medium, with a computer program which can be executed by a computer according to claim 9.

11. Ultrasound transducer (10) with a computer program product according to claim 10 or an implementation of the computer program according to claim 9 with means for signalling a deposit which is detected
by determining a conductance of the ultrasound transducer (10) by means of an impedance spectroscopy,
by determining an attenuation ($R$) and a resonance ($\Omega$) of the ultrasound transducer (10) and
by plotting the resonance ($\Omega$) against the attenuation ($R$) in a coordinate system and on the basis of reference points resulting thereby.

**Revendications**

1. Procédé de détermination de dépôt sur un transducteur (10) ultrasonore pendant son fonctionnement,
   **caractérisé en ce que**
   l'on détermine une conductance du transducteur (10) ultrasonore au moyen d'une spectroscopie d'impédance,
   dans lequel, à l'aide de la conductance, on détermine un amortissement ($R$) et une résonance ($\Omega$) du transducteur (10) ultrasonore et
   dans lequel on porte la résonance ($\Omega$), dans un système de coordonnées, en fonction de l'amortissement ($R$) et, à l'aide des points de lieu ainsi obtenus, on décide de dépôts éventuels.

2. Procédé suivant la revendication 1, dans lequel on se donne comme conductance une conductance ($G$) mesurée et une conductance ($\hat{G}$) estimée, et dans lequel on définit une fonction ($\varepsilon$) d'erreur sur la base d'une différence entre la conductance ($G$) mesurée et la conductance ($\hat{G}$) estimée.

3. Procédé suivant la revendication 2, dans lequel, pour la conductance ($\hat{G}$) estimée, on prend un schéma (28, 36) équivalent du transducteur (10) ultrasonore, qui comprend une branche (30, 32, 34) série pour chaque fréquence de résonance du transducteur (10) ultrasonore.

4. Procédé suivant la revendication 2 ou 3, dans lequel, pour minimiser un écart décrit par la fonction ($\varepsilon$) d'erreur de

la conductance ($G$) mesurée à la conductance ($\hat{G}$) estimée, on utilise un procédé d'optimisation numérique, notamment le procédé dit de Gauss-Newton.

5. Procédé suivant la revendication 3 et 4, dans lequel, lorsque l'on applique le procédé d'optimisation numérique, on détermine des valeurs d'estimation de l'amortissement ($R$) et de la résonance ($\Omega$) du transducteur (10) ultrasonore et dans lequel on détermine séparément les valeurs d'estimation pour une pluralité de fréquences de résonance du transducteur (10) ultrasonore.

6. Procédé suivant la revendication 5, dans lequel, pour la pluralités des fréquences de résonance, leur choix s'effectue suivant leur prépondérance respective, dans les résonances restantes dans un spectre de conductance, après séparation respective d'une résonance prépondérante précédente.

7. Procédé suivant l'une des revendications précédentes, dans lequel, avec la détermination de l'amortissement ($R$) et de la résonance ($\Omega$), notamment de la résonance ($\Omega$) et de la position de la résonance ($\Omega$), on détermine une charge ($Z$) acoustique, agissant sur une surface du transducteur (10) ultrasonore, en fonction d'une épaisseur ($d$) du dépôt à déterminer.

8. Procédé suivant l'une des revendications précédentes, dans lequel, pour décider de dépôts éventuels, on introduit, à l'aide d'au moins un point de lieu, un classificateur, qui rend distinguable une position de points de lieu pour une surface non revêtue, ou du moins sensiblement non revêtue, du transducteur (10) ultrasonore, d'une position de points de lieu correspondants dans une surface revêtue du transducteur.

9. Programme d'ordinateur, comprenant des instructions de code de programme pouvant être réalisées par un ordinateur pour la mise en oeuvre du procédé suivant l'une des revendications 1 à 8 lorsque le programme d'ordinateur est réalisé sur un ordinateur.

10. Produit de programme d'ordinateur, notamment support de mémoire, comprenant un programme d'ordinateur suivant la revendication 9 pouvant être réalisé par un ordinateur.

11. Transducteur (10) ultrasonore, comprenant un produit de programme d'ordinateur suivant la revendication 10 ou une mise en oeuvre du programme d'ordinateur suivant la revendication 9 avec des moyens de signalisation d'un dépôt
par détermination d'une conductance du transducteur (10) ultrasonore au moyen d'un spectroscopie d'impédance,
par détermination d'un amortissement ($R$) et d'une résonance ($\Omega$) du transducteur (10) ultrasonore et
par portée de la résonance ($\Omega$) dans un système de coordonnées, en fonction de l'amortissement ($R$) et détecté à l'aide des points de lieu qui s'ensuivent.

## FIG 1
### ( Stand der Technik )

## FIG 2a

## FIG 2b

## FIG 3a

## FIG 3b

FIG 4a

FIG 4b

FIG 4c

FIG 4d

## FIG 5

$$Z_m \rightarrow \begin{bmatrix} \cos(kd) & jAZ_0 \sin(kd) \\ -j\dfrac{\sin(kd)}{AZ_0} & \cos(kd) \end{bmatrix} \quad Z_L$$

## FIG 6

$d = 1\mu m$

$[kHz]$

$d = 5\mu m$

$Z_L = 2.5\ MRayl$

$Z_L = 1.5\ MRayl$

$\Delta R\ [k\Omega]$

**IN DER BESCHREIBUNG AUFGEFÜHRTE DOKUMENTE**

**In der Beschreibung aufgeführte Patentdokumente**

- EP 1480021 A2
- US 5706840 A